# EUROPEAN PATENT APPLICATION

(11) **EP 4 346 310 A1**
(43) Date of publication of application: **03.04.2024**
(21) Application number: 22198878.5
(22) Date of filing: 29.09.2022
(51) Int. Cl.: H04W 72/27, H04W 36/00, H04W 72/543

(54) **IMPROVED BASE STATION EFFICIENCY**

(71) Applicant: Vodafone Group Services Limited, Newbury RG14 2FN (GB)
(72) Inventor: WORRALL, Chandrika, London, W2 6BY (GB); KULAKOV, Alexey, London, W2 6BY (GB); PUDNEY, Chris, London, W2 6BY (GB)
(74) Representative: Boult Wade Tennant LLP

(57) **Abstract**

Method and system for managing one or more base stations comprising a first base station determining characteristics of one or more data streams between the first base station and one or more user equipment, UE. Transmitting data describing the determined characteristics of the one or more data streams to a second base station. The second base station receiving data describing the determined characteristics of the one or more data streams. The second base station allocating radio resources of the second base station based on the received characteristics.

## Description

### Field of the Invention

The present invention relates to a system and method for transmitting data within a telecommunications system with improved efficiency.

### Background of the Invention

Separate services within mobile networks can be provided as separate data streams. Furthermore, each individual service may each comprise separate data streams. These separate data streams often have different quality of service requirements as they have different attributes when received by user equipment (UE) or terminal. Different types of data packets within each data stream can have different requirements. These service requirements may be based on particular desired user experiences for each service, portion of a service or other technical requirements. For example, live video chat services may require low latency but may accept high error rates. In contrast, video content delivery services, such as those providing movies and TV programmes, can be buffered but require higher bandwidth and lower error rates to reach particular user experience requirements or other technical requirements. Data services such as those providing extended reality (XR) functionality to video goggles or glasses can include separate data streams with different traffic patterns and their own separate requirements. These may include video presented to a user in front of their field of view or omnidirectional background images. Furthermore, some frames of the video stream may be coded in a different way to others (e.g., I vs P frames).

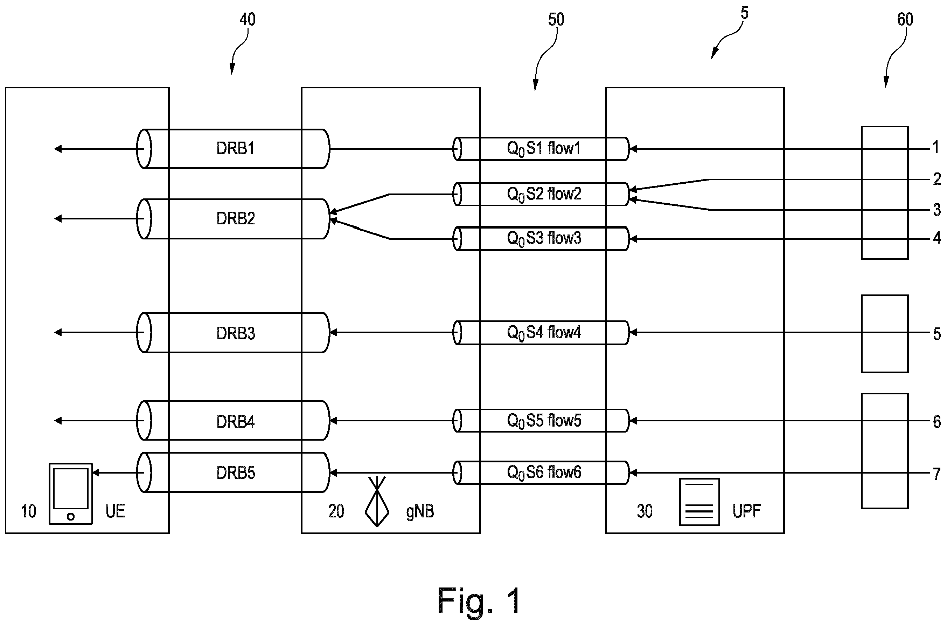

Figure 1 illustrates schematically a system that includes one or more service providers 60 that provide data services through a user plane function (UPF) 30 to one or more base stations (gNB) 20 and onto individual UEs 10. Each service 60 may have a defined set of quality of service (QoS) requirements. For each data stream having a particular QoS set of requirements, a separate data radio bearer (DRB) 40 may be set up between the base station 20 and the UE 10. Again, each DRB 40 has a particular set of transmission quality parameters that it can reach, and this is set when the DRB 40 is initiated between a particular base station 20 and UE 10. All data through the DRB 40 is provided according to this initial property set. It is possible to send different data streams through the same DRB 40 (e.g., using multiplexing) and the DRB 40 sends each data packet in the data stream according to the same parameters used to initialise the DRB 40.

As shown in figure 1, the system 5 includes one or more UEs 10, at least one base station or gNB 20. The set of data services 60 stream data to the UPF 30 as separate data streams 1-7. Each of these data streams 1-7 has its own quality requirements or parameters. Quality requirements from different data streams 1-7 may be similar or the same and when they are the same or similar then, these may be combined to pass through the same QoS flow 50. For example, figure 1 shows example data service 1 using a single QoS flow (1) from the UPF 30 to the base station 20. However, data services 2 and 3 have the same or similar quality requirements (different from data service 1) and so can share the same QoS flow (2).

The base station 20 sets up different DRBs 40 to pass the data to the UE 10. Again, a separate DRB 40 may be initiated for each data service, data type or data streams having the same or similar quality requirements. These data streams may be sent through the same DRB 40.

Under 5G NB, up to 32 DRBs are available for each UE 10 at any one time. Therefore, this is a limited resource. Furthermore, setting up new DRBs 40 at each base station 20 and UE 10 incurs additional overheads. Whilst it is possible to multiplex different streams through a single DRB 40 if necessary, the DRB 40 must be set up with the highest set of parameter requirements out of all of the different data services that are to use that particular DRB 40. As the DRB 40 must be initiated with the highest data stream requirements, other data streams within the same DRB 40 (that may have lower quality requirements) are still provided with this highest level. This unnecessarily allocates resources when they are not required for particular data flows. This can be particularly apparent when data services provide multiple different data streams for virtual reality or augmented reality (e.g., extended reality - XR). Within such extended reality services, there may be multiple data streams including video streams, cloud gaming, background architecture and other data streams necessary to set up the full service. This can require a high number of separate DRBs 40 to be set up (each with different data quality parameters) or separate data streams may be multiplexed within the same DRB 40 at the same (highest) data quality transmission rates and parameters.

Whilst these particular system requirements are applied to the Uplink (UL) side (e.g., between the gNB and UE), similar issues are encountered on the Downlink (DL) side.

Whilst some data services may provide the core network with characteristics of the data stream that they require and this information may be used to allocate radio resources within the base station 20, this is not always the case, especially with encrypted traffic where little or no information may be determined from it. Furthermore, there may be little or no cooperation between the data services and the network operator. Therefore, it may take some time for a particular base station 20 to determine the radio resources that are required to satisfy the requirements of a particular UE engaged in one or more data services. Therefore, a base station 20 will generally treat all unknown data streams in the same way. This may involve allocating more radio resources to individual data streams than is necessary or may require the base station 20 to refuse admission of a new UE following a handover request because the required and precautionary high level of radio resources are not available. This may be unnecessary if the data services required by a UE uses fewer radio resources. Nevertheless, the base station 20 may maintain an overly precautionary approach. Additionally, the base station 20 may admit too many UEs that it can't adequately serve if they all require a high level of radio resources, and these radio resources are no available to the base station 20. In any case, this can lead to inadequate or inefficient allocation of radio resources by base stations.

Therefore, there is required a system and method to overcome these problems.

### Summary of the Invention

A particular base station serves data services to one or more user equipment (UE). This takes the form of a data stream having particular characteristics. In order to provide the UE with a data service at a sufficient quality in terms of bandwidth, latency and other quality of service (QoS) requirements, then certain radio resources need to be allocated to the UE. This may be in the form of setting up or changing parameters of a data radio bearer (DRB), for example or may take other forms. Some data services may advertise or request certain minimum QoS requirements, and this information may be passed on to the base station (e.g., through a core network) so that the correct radio resources may be allocated. However, this information may not always be sufficient or available. The base station may initially allocate a high or highest level of radio resources to the UE data stream and over time, determine that this level may be reduced. For example, the periodicity of any multiplexing process may be altered over time to match the characteristics of the particular data stream provided to a particular UE or group of UEs or requests for data. This may take several seconds or longer to achieve.

In order to avoid, this, the gathered characteristics information is passed on to one or more other base stations (e.g., gNBs) providing them with information about potential data requirements that may be imposed on them. For example, this information may be received from a neighbouring base station. Should the UE handover to the base station that received the characteristics (or if a new UE requires a data service that has already be provided and analysed to a different UE) then the base station may immediately allocate the necessary radio resources and/or set up the DRB with a more appropriate set of QoS parameters to more accurately match the requirements of the data stream without having to determine this over a period of time. Therefore, the radio resources can be optimised more quickly. Furthermore, this information may be used by the base station receiving the characteristic information to make a decision on whether or not to admit the UE, especially if it is at or close to a limit on available radio resources.

In accordance with a first aspect, there is provided a method for managing one or more base stations, the method comprising the steps of:
a first base station determining characteristics of one or more data streams between the first base station and one or more user equipment, UE;
transmitting data describing the determined characteristics of the one or more data streams to a second base station;
the second base station receiving data describing the determined characteristics of the one or more data streams; and
the second base station allocating radio resources of the second base station based on the received characteristics. Therefore, the second base station can have advanced warning of demands for radio and other resources that will be placed on it and so may be able to more appropriately and more quickly allocate the correct radio and other system resources for particular data services, UE(s) or groups or types of data requests. The characteristics may be sent to just a single base station (the second base station) or to a plurality of base stations (a subset of base stations) or all other base stations in a telecommunications network. The characteristics maybe those of a particular data stream provided to a single UE (e.g., at a particular instant in time) or more general characteristics provided to types or groups of UEs that consume particular types of data streams or data streams from an application server or group or type of application server, for example. The first base station can gather characteristics from different data streams over time, for example. Whilst the characteristics information may be used solely as a basis for the allocation of radio resources, other information may be taken into account as well and this combination may be used. For example, other information may include the total available radio resources for the second base station or already allocated radio resources (i.e., those already allocated to connected UEs), and/or the traffic characteristics information sent by the core network, if any or QoS characteristic sent by the core network, if any.

Preferably, the method may further comprise the step of:
the second base station providing a data stream to a UE using the allocated radio resources. Therefore, the second (or further) base station can make use of the received information to provide more appropriate radio resources to the UE and without unnecessary delay in providing the correct level.

Optionally, the step of allocating resources may further comprise the step of setting up, configuring and/or reconfiguring one or more data radio bearer, DRB, between the UE and the second base station. For example, this may determine DRB parameters to use and so avoid the need to over-specify a DRB (at high QoS parameters) for a data stream of unknown requirements. This process may also be used to configure or reconfigure a plurality of DRBs (for the same or for different UEs).

Optionally, the method may further comprise the step of the first base station determining a category for each of the one or more data streams, and wherein the data describing the determined characteristics includes the category of each of the one or more data streams.

Optionally, the method may further comprise the step of determining that the data stream provided to the UE is in the same category as included in the received data before the step of allocating the radio resources of the second base station. Therefore, the second (or other) base stations may be requested to provide a new UE (e.g., following a handover) with data services. The second base station can determine a category of this new UE (e.g., for a list or known categories that it has already received data characteristics or descriptions of), review its received characteristics (or apply predetermined radio resource allocations) corresponding this this category and allocate radio or other resources to the data stream provided to the new UE. This can avoid needing to over-allocated resources and then reduce this allocation over time or refuse additional UE connections when this is not required given the total available resources.

Optionally, the category may comprise any one or more of: UE identifier or group of UE identifiers and data service type of the data stream. Other categories may be used.

Optionally, the method may further comprise the step of the second base station determining that sufficient radio resources are available to provide the data stream to the UE according to the received characteristics before admitting the UE access to the second base station. This may follow a handover request or at any time that a UE is requesting connection to the second base station.

Optionally, the first base station and the second base station are within adjacent cell sites. However, they may be distant base stations, or the information may be sent to all base stations withing a particular area or within the entire telecommunications network. This information may be stored (e.g., within each base station or remote from the base stations) and updated over time, for example. Required radio resources may be mapped against received characteristics in advance or as required.

Optionally, the characteristics of the one or more data streams may comprise any one or more of: quality of service, QoS; latency; bandwidth; periodicity; error rate; priority; cyclic data patterns; round trip delay; jitter; data volume; and data rate variation. Other characteristics may be included. For example, a data stream may include periodic bursts of data with quiet periods in between. There may be several such periodic transmissions of data each with their own periodicities and data volumes, for example. Therefore, radio resource requirements may be predicted and provided dynamically according to predicted requirements.

Optionally, the one or more data streams between the base station and one or more UE may be uplink and/or downlink data streams. Therefore, radio requirements in both directions may be predicted and allocated.

Optionally, the step of the first base station determining characteristics of one or more data streams between the first base station and one or more UE may further comprise an application server providing the characteristics of the data stream, wherein the application server generates the one or more data streams. The application server may provide data services to a UE and so be aware of the characteristics of such a data stream. The application server may also receive data from the UE (e.g., in order to provide extended or virtual reality processing). Therefore, the application server can determine the characteristics based on data received from the UE (e.g., image or video data have a particular resolution or frame rate). The application server can provide this information or information used to determine the characteristics to the first base station either directly or through an intermediary. Information (or partial information) from the application server may also supplement characteristics determined by the first base station, for example.

Preferably, the application server may provide the characteristics to a core network and the core network provides the characteristics to the first base station. This information or data may be provided through a user plane function (UPF) or otherwise.

Optionally, the one or more data streams may be any one or more of: augmented reality; virtual reality; extended reality data streams; and cloud gaming. Other types of data stream may be used, including streaming, video and audio data, for example.

According to a second aspect, there is provided a telecommunications system comprising:
a first base station; and
a second base station, wherein
the first base station comprises means adapted to execute the steps of:
   determining characteristics of one or more data streams between the first base station and one or more user equipment, UE; and
   transmitting data describing the determined characteristics of the one or more data streams to the second base station, and further wherein
the second base station comprises means adapted to execute the steps of:
   receiving the data describing the determined characteristics of the one or more data streams; and
   allocating radio resources of the second base station based on the received characteristics.

Preferably, the means (e.g., computing means) of the second base station(s) are further adapted to execute the step of:
providing a data stream to a UE using the allocated radio resources.

Optionally, the telecommunications system may further comprise an application server configured to provide the one or more data streams. The application server may provide directly or indirectly information used by the first base station to determine the characteristics, for example.

According to a third aspect, there is provided a computer program product comprising instructions which, when the program is executed by a computer, causes the computer to carry out the method, as described above.

The methods described above may be implemented as a computer program comprising program instructions to operate a computer. The computer program may be stored on a computer-readable medium.

The computer system and telecommunications system may include a processor or processors (e.g. local, virtual or cloud-based) such as a Central Processing Unit (CPU), and/or a single or a collection of Graphics Processing Units (GPUs). The processor may execute logic in the form of a software program. The computer system may include a memory including volatile and non-volatile storage medium. A computer-readable medium may be included to store the logic or program instructions. The different parts of the system may be connected using a network (e.g. wireless networks and wired networks). The computer system may include one or more interfaces. The computer system may contain a suitable operating system such as UNIX, Windows (RTM) or Linux, for example. Particular instructions or method steps may be carried out by different components, or the steps may be shared across separate components. Any of the aspects may be combined or different parts of the different described methods may be used with any other described method or parts of the described methods. Furthermore, a telecommunications system may use any one or more (or all) of the described methods. When used together, the separate methods combine to provide additional efficiency gains. For example, either or both of the uplink and the downlink may be enhanced using the described methods.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic diagram of an existing system, including User Equipment (UE), a base station and a User Plane Function (UPF);
FIG. 2 shows a schematic diagram of an existing method for setting up a data radio bearer (DRB) in the system of figure 1;
FIG. 3 shows a schematic diagram of a further existing method for setting up a DRB in the system of figure 1;
FIG. 4 shows a schematic diagram of a further existing method for setting up a DRB in the system of figure 1;
FIG. 5 shows a schematic diagram of an enhanced method for setting up a DRB in a telecommunications system;
FIG. 6 shows a flowchart of a method for improving the transmission of data;
FIG. 7 shows a flowchart of a further method for improving the transmission of data;
FIG. 8 shows a flowchart of a further method for improving the transmission of data;
FIG. 9 shows a schematic diagram of the timing of messages with a UE in a telecommunications system;
FIG. 10 shows a schematic diagram of the timing of messages with a UE in a telecommunications system;
FIG. 11 shows an example information element used to configure a telecommunications system;
FIG. 12 shows an example information data header used to configure a telecommunications system;
FIG. 13, shows a schematic diagram of data packets being transmitted within an enhanced telecommunications system;
FIG. 14 shows an example set of parameters used to initiate a DRB within the enhanced telecommunications system;
FIG. 15 shows a schematic diagram of a system for managing one or more base stations; and
FIG. 16 shows a flowchart of a method for managing the one or more base stations of figure 15.

It should be noted that the figures are illustrated for simplicity and are not necessarily drawn to scale. Like features are provided with the same reference numerals.

### Detailed description of the preferred embodiments

Mobile network types (e.g., LTE) map different services (e.g., video, voice, web, etc) to particular quality characteristics, which must be satisfied in order to provide a necessary user experience. These services are provided to customers via user equipment (UE) such as smartphones, tablets, loT devices or other connected devices. Once data packets are sent from the User Plane Function or Entity (UPF) 30 to a base station (or gNB), they are treated according to pre-defined Quality of Service (QoS) flows that are mapped to a data radio bearer (DRB) 40. The configuration (features and settings) of the DRBs 40 are selected to fulfil these QoS parameters.

Some data services can be technically realised such that all data packets providing that service are the same or similar in terms of size, periodicity, and other requirements. However, there are some services that have data packets of different size, periodicity, and importance to the customer or end user. One or more data flows may be transmitted as parts of different data services. Furthermore, different data streams within a single data service, can include data packets that are more important than others and so have different technical and quality of transmission requirements.

For example, streaming video into glasses or 3-D goggles may include images of primary importance (visual information provided at the user's central field of view and other images may provide background or peripheral information. These data may be transmitted as separate streams having different compression and other quality parameters. These may comprise I and P frames, for example, providing information for the central and less important peripheral information, respectively.

When a service is setup or initiated, corresponding configurations may be provided to subsequent nodes in the network so that the traffic may be handled according to these configurations and requirements.

In general, different QoS flows may be mapped to separate DRBs 40 to enable the gNB 20 to satisfy the QoS requirements of the air interface. The gNB 20 may enable radio related features and schedule the packets differently for each DRB 40.

Example characteristics of different QoSs (5GQIs) in 5G are standardized in 23.501 table 5.7.4-1. This is shown in table 1 below.

**Table 1**

| | | | | | | | |
|---|---|---|---|---|---|---|---|
| 5QI Value | Resource Type | Default Priority Level | Packet Delay Budget | Packet Error Rate | Default Maximum Data Burst Volume | Default Averaging Window | Example Services |

Important quality attributes may include: resource type: guaranteed bit rate or non-guaranteed bit rate, priority, packet delay budget, packet error rates, and protocol data unit (PDU) set information for example. PDU Set: A PDU Set is composed of one or more PDUs carrying the payload of one unit of information generated at the application level (e.g., a frame or video slice for XRM Services, as used in TR 26.926 [27]). Other quality attributes may be used. Once the DRB 40 and/or QoS flow or flows 50 are established then these parameters remain known to the gNB 20 without the need for additional data to be sent. Some parameters may be sent to the gNB 20 explicitly. These may include: maximum bit rate, guaranteed bit rate, and allocation retention priority, for example.

In 5G (New Radio - NR) technology, traffic from QoS flows 50 with very similar of the same QoS characteristics may be associated to the same DRB 40 as long the QoS of these QoS flows 50 is satisfied. However, this can lead to higher than necessary resources being provided to data packets from different QoS flows and this can cause inefficiencies in the use of radio and other resources.

The treatment of data packets inside one DRB 40 remains the same for all data packets in that DRB 40. Whilst this can be acceptable where few different services are being provided to a UE 10, this can increase inefficiencies when additional data services are added or used at the same time.

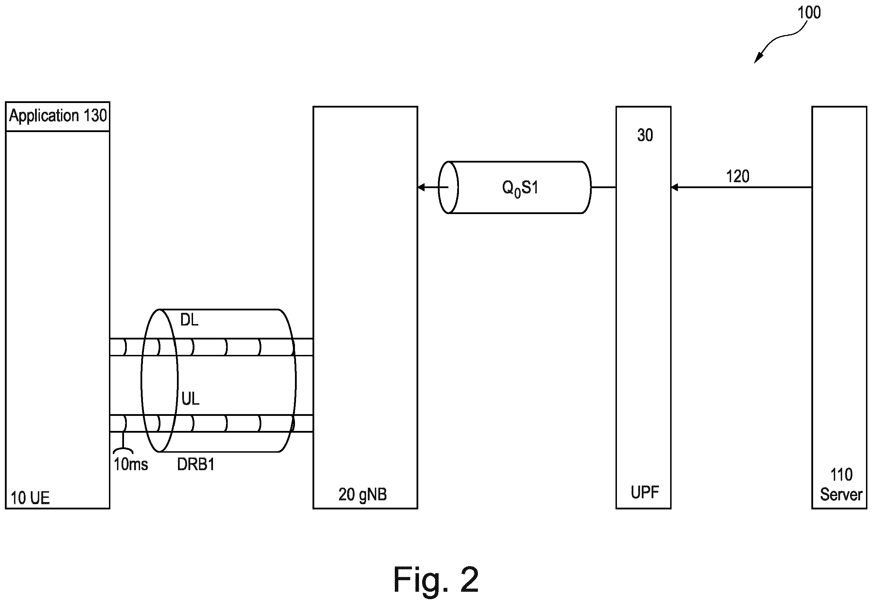

Figure 2 shows schematically a system 100 in which a conventional DRB 40 is set up for a single data service 120 (e.g., a video stream) provided by a server 110. As can be seen from figure 2, all data packets in the uplink (UL) and downlink (DL) on the radio interface within DRB1 are treated the same. In this example, the periodicity of the data streams within DRB1 is 10ms (other values may be used). This is despite different data packets (or data packet types) having a different value from the perspective of service satisfaction. For example, it may be acceptable for some of the data packets (or frames) to be lost at a higher rate or transmitted with a higher jitter without contributing to unacceptable service degradation. Some data packets may be compressed using different or higher compression ratios or technology and still provide an acceptable user experience. Nevertheless, all data packets within DRB1 are treated the same and expend the same system and telecommunications resources (e.g., per bit of data).

In the example of figure 2, the data service 120 originates within server 110 (e.g., an extended reality server). The data packets are sent to the UPF 30. The data stream between the UPF 30 and the gNB 20 has a particular set of transmission quality parameters (e.g., each corresponding to the parameter types of table 1). These transmission quality parameters are used to set up a QoS flow (QoS1 in figure 2) within which to provide the data packets between the UPF 30 and the gNB 20.

An application 130 on the UE 10 receives and processes the data packets so that the service can be rendered on the UE 10 or provide an additional service.

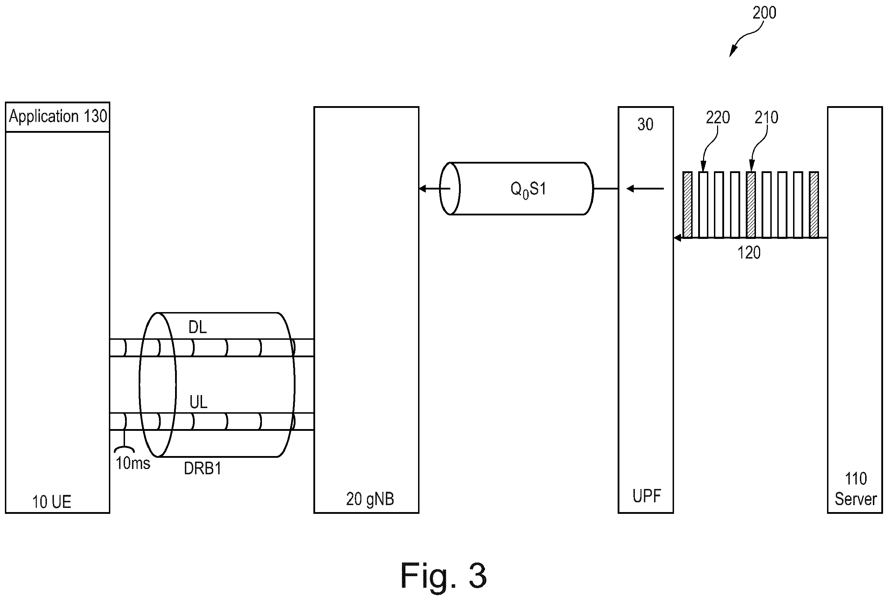

Whilst figures 2 illustrates the provision of a data service that has a single type of data packets, some data services can include different types of data packets or frames. Figure 3 shows schematically a system 200 that expands upon the system 100 of figure 2, where a data service 120 includes two different data packet types. For example, an XR data service may include a video stream to provide the XR environment. Other types of data packets may have more demanding requirements such as a live video stream within the XR environment. For example, P-frame data packets and I-frame data packets, used to compress video for both the XR environment and for the live video stream are shown as being sent through the same QoS flow, QoS1 and DRB (DRB1) in figure 2.

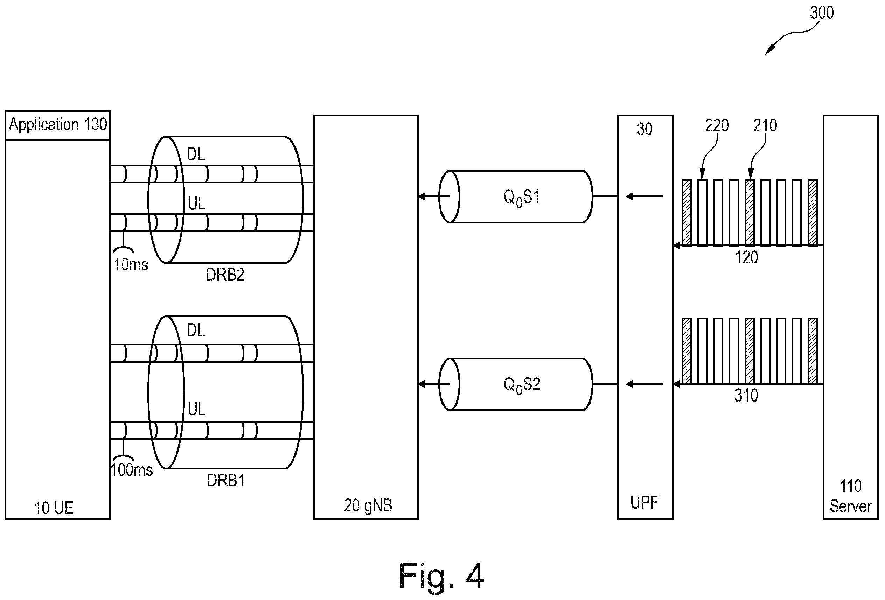

In order to avoid such a situation where different priority data streams have to be sent with the same transmission quality parameters, then multiple QoS streams and DRBs 40 may be set up. This is illustrated schematically in figure 4. In this alternative system 300, the XR environments stream 120 (having its compressed video data packets) is provided by the server 110 separately to the live video stream 310. However in this case, the live video stream has its own separate QoS flow (QoS2) with different transmission quality parameters to those of QoS1, which may have lower transmission quality parameter requirements. Separate DRBs (DRB1 and DRB2) are also set up between the gNB 20 and the UE 10 to provide these separate data streams. As can be seen from figure 4, one DRB has a periodicity of 10ms (DRB2), whilst DRB1 has a periodicity of 100ms. This is to accommodate the different data streams, which have different requirements. Whilst this avoids sending data packets at higher transmission quality parameters than necessary, this requires the setting up of an additional DRB, which has its own system overhead and is itself a limited resource.

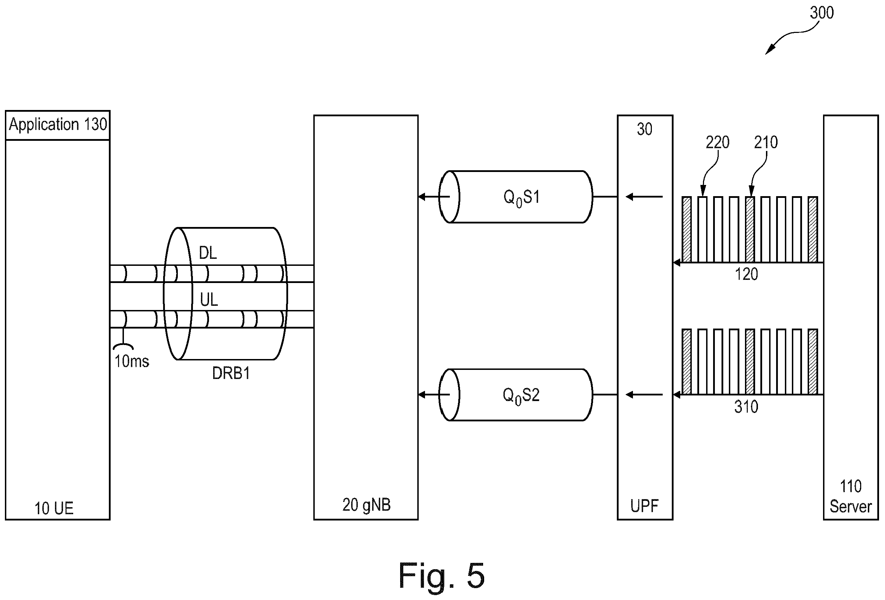

Whilst the number of DRBs that any one UE 10 can support in New Radio (5G) has increased from eight DRBs to 32 DRBs, this still represents a limited resource. Figure 5 illustrates the system mapping the two different QoS flows (QoS1 and QoS2) to the same DRB (DRB1) set up with the highest speed periodicity (10ms) of the two DRBs of figure 4 but again, this configuration sends some data packets using a higher set of transmission quality parameters than necessary for that particular data stream.

There are several separate but complementary ways in which this situation can be improved. Each individual method that will be described can be used on its own and improve overall efficiency and effectiveness of the telecommunications system or they may be combined in any combination for even greater effect and improvement.

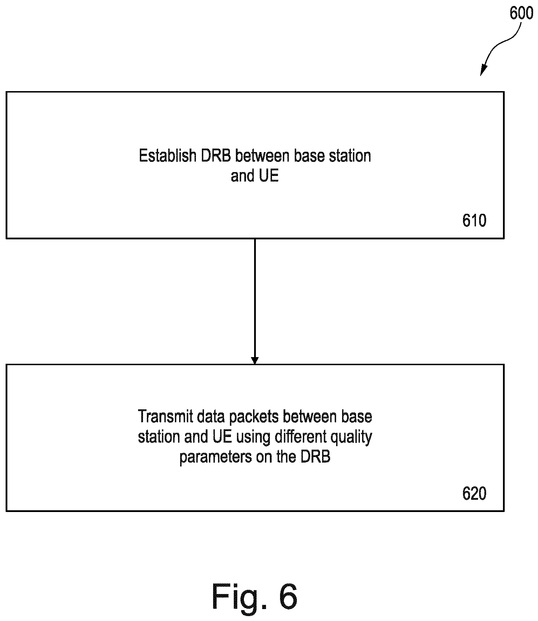

Figure 6 shows a flow chart of a method 600 for communicating data to a UE 10. The data are transmitted in the form or data packets and may originate from a server 110, service or other network function. At step 610, a DRB 40 is established between a base station or gNB 20 and a UE 10. At step 620, the data packets are transmitted between the base station 20 and the UE 10 over the DRB 40 using different transmission quality parameters. Therefore, data traffic can be more efficiently communicated with the UE 10. For example, a video stream may include different parts or frames having different characteristics and requirements related to reliability, packet delay budget and acceptable jitter. These can be sent over the same DRB 40 and so reducing the total number of necessary DRBs but without having to set up the DRB 40 with the highest transmission quality parameter for any particular data packet type. This reduces the overall required overheads of the system and so more data can be transmitted more efficiently. Therefore, the DRB 40 can operate with variable transmission properties rather than being fixed.

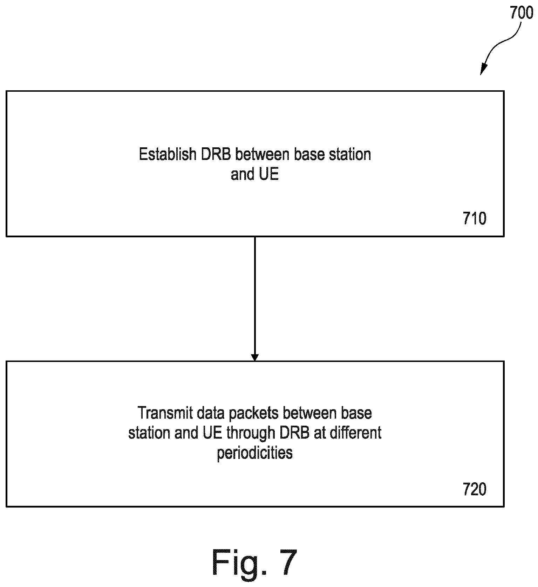

Figure 7 shows a flowchart of a further method 700 for improving the communication of data to the UE 10. Again, a DRB 40 is established between the base station or gNB 20 and the UE 10 at step 710. The data packets are transmitted over the DRB 40 at different or variable periodicities. For example, the base station 20 may provide the UE 10 with information mapping the periodicities of the different data packets or data packet types in a time division multiplexed data stream. The information mapping the periodicities of the separate data services in the multiplexed data stream may be provided as a table to the UE 10 or in another format.

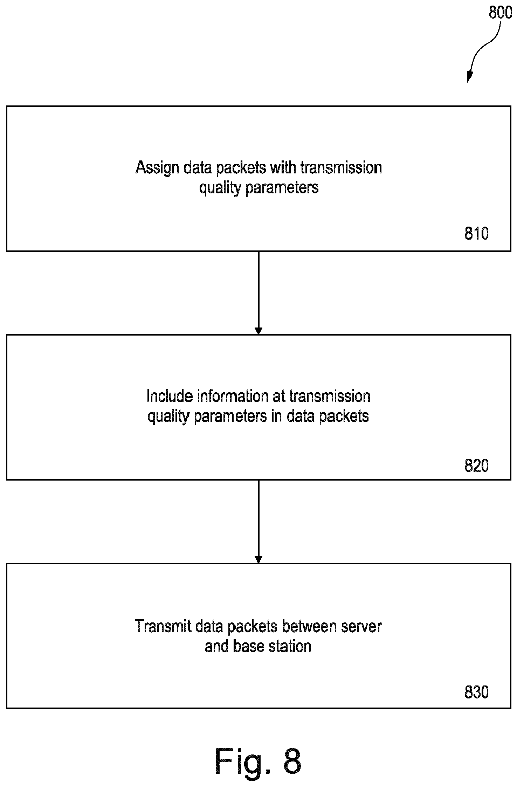

Whilst methods 600 and 700 described with reference to figures 6 and 7, respectively, improve the use of resources used for the DRB 40, further improvements may be achieved when communicating the data packets between the service provision server 110 providing the data service and the base station 20. Such a method 800 is shown as a flowchart in figure 8.

At step 810, each data packet is assigned with a set of transmission quality parameters. The base station 20 or the UPF (a server) 30 or another part of the core network may carry out this assignment or this may be determined in another way. The assignment of transmission quality parameters may be explicit. For example, this may be achieved by providing a set of transmission quality parameters with each data packet, e.g., as part of a header, or defining a predetermined set of parameters out of a plurality of sets of parameters. Alternatively, the data packets may be assigned with or as a data packet type, where each type has an associated set of transmission quality parameters. The information may be examined before a new QoS flow is established and set it up with more appropriate transmission quality parameters. Therefore, the QoS flow can be established and its resources allocated more appropriately according to uplink requirements from the UE 10 (e.g., for live video streaming).

The information defining the transmission quality parameters are included within the data packets. This information may also be implicit and indicated by the nature or properties of the data packets (e.g., size, content, etc.) In an example implementation, the information is included within a part of a GTP-U header of the data packet. At step 830 the data packets are transmitted between the server (e.g., UPF 30 that receives the data from server 110) and the base station 20.

The following describes the implementation of these methods and systems in more detail.

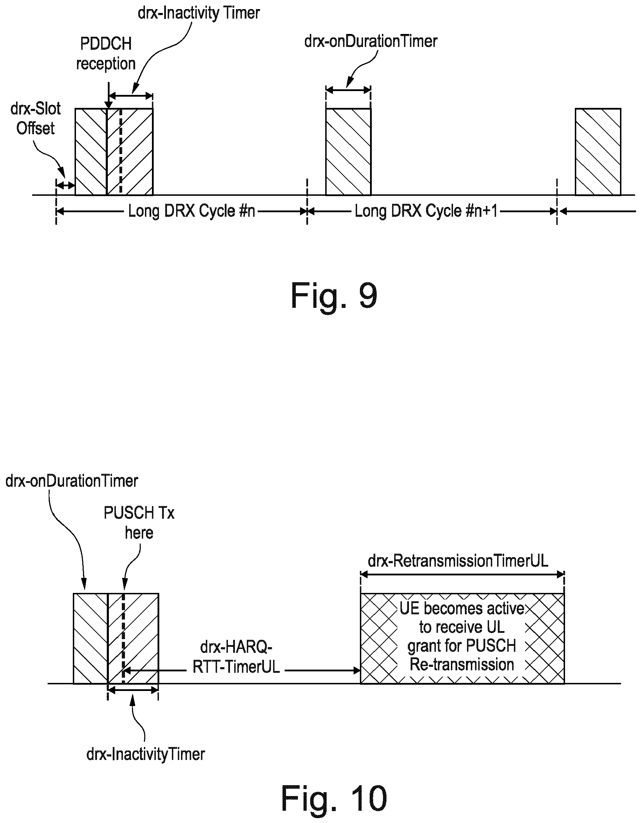

In current telecommunication systems, UEs 10 are not necessarily listening to data channels all of the time but only during certain periods. This is illustrated schematically in figure 9. This figure illustrates at a high level how the UE 10 wakes up during a drx-on-duration timer and go to sleep after this time. When the UE 10 is scheduled with data during the time that it was active, then it would stay awake for an additional period (drx-inactive).

Figure 10 illustrates schematically the process of the UE 10 sending data. As can be seen in figure 10, the timer drx-HARQ-RTT-TimerUL defines the period that the UE 10 can expect a grant for uplink re-transmission. A further timer, drx-RetransmissionTimerUL, specifies a maximum number of slots for which the UE 10 should be monitoring PDCCH when a grant for uplink re-transmission is expected by the UE 10. Therefore, the gNB is able to send different parameters per stream to the UE 10. For example, the UE 10 may wait for retransmissions from the gNB 20 for a greater time for one data stream than for another.

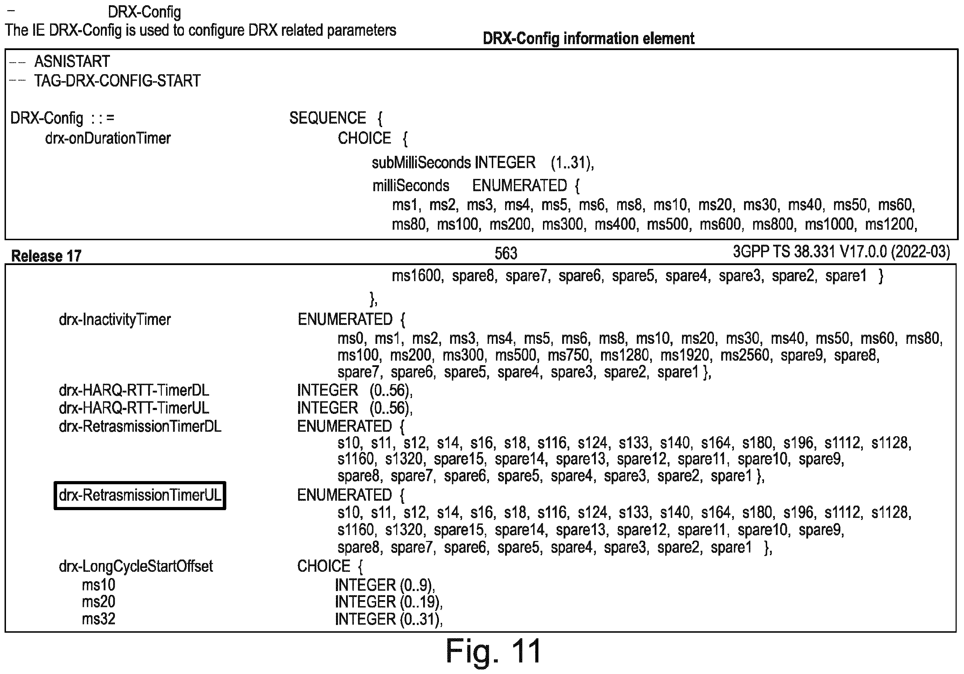

Depending on the particular traffic characteristics, the DRX-RetransmissionTimerUL might be configured with different values or time periods and this needs to be provided to the UE 10. There may be multiple DRX-RetransmissionTimerUL values that are provided to the UE 10. In some examples, DRX-RetransmissionTimerUL_low and DRX-RetransmissionTimerUL_high may need to be defined to differentiate between low and high priority packets, which also require acknowledgment. For example, DRX configuration inside a RRCReconfiguration message may be used or any other RRC message where DRX-Configuration is present. An example current DRX-Configuration is shown in figure 11 (taken from 3GPP TS 38.331 V17.0.0 (2022-03)).

Providing information to the gNB 20 regarding a transmission quality parameter such as the priority of a data packet (e.g., high or low priority), is important as this enables the dNB 20 to be able to differentiate between DRX-RetransmissionTimerUL _Low and DRX-RetransmissionTimerUL_high data packets. Furthermore, this allows the gNB 20 to know how long the UE 20 will be waiting to receive an "ack" message. It is one enhancement to the current system that the UE 10 provides this information to the gNB 20.

In one example implementation of this enhancement, the MAC-PDU header, which normally consists of several sub-headers, may be used. As it can be seen from the table 2, which shows the structure and values of LCID for UL-SCH, there is a reserved bit in the MAC header. According to this enhancement, this reserved bit may be used to indicate the importance of the data packet or other transmission quality parameter or set of parameters. Therefore, the UE 10 is able to differentiate streams with different characteristics and able to send packets to the gNB 20 identifying different streams using the MAC header.

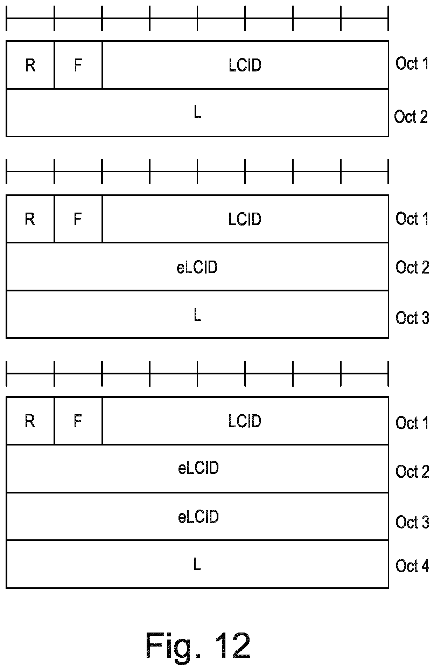

If finer grained information about the importance of data packets is required, i.e. a need to provide more information than low and high importance data packets, then this also requires more than two different DRX retransmissionTimerUL timers. This requires more than one bit to indicate the priority of the packet or other transmission quality parameter. Therefore, in another example implementation of this enhancement, other reserved bits may be used, for example, the reserved bits from LCID (or eLCID), as illustrated schematically in figure 12.

### Table 6.2.1-2 Values of LCID for UL-SCH

**Table 2**

| **Codepoint/Index** | **LCID values** |
|---|---|
| 0 | CCCH of size 64 bits (referred to as "CCCH1" in TS 38.331 [5]), except for a RedCap UE |
| 1-32 | Identity of the loqical channel of DCCH and DTCH |
| 33 | Extended logical channel ID field (two-octet eLCID field) |
| 34 | Extended logical channel ID field (one-octet eLCID field) |
| 35 | CCCH of size 48 bits (referred to as "CCCH" in TS 38.331 [5]) for a RedCap UE |
| 36 | CCCH1 of size 64 bits (referred to as "CCCH1" in TS 38.331 [5]) for a RedCap UE |
| 37-43 | Reserved |
| 44 | Timing Advance Report |
| 45 | Truncated Sidelink BSR |
| 46 | Sidelink BSR |
| 47 | Reserved |
| 48 | LBT failure (four octets) |
| 49 | LBT failure (one octet) |
| 50 | BFR (one octet Cᵢ) |
| 51 | Truncated BFR (one octet Cᵢ) |
| 52 | CCCH of size 48 bits (referred to as "CCCH" in TS 38.331 [5]), except for a RedCap UE |
| 53 | Recommended bit rate query |
| 54 | Multiple Entry PHR (four octets Cᵢ) |
| 55 | Confioured Grant Confirmation |
| 56 | Multiple Entry PHR (one octet Cᵢ) |
| 57 | Single Entry PHR |
| 58 | C-RNTI |
| 59 | Short Truncated BSR |
| 60 | Long Truncated BSR |
| 61 | Short BSR |
| 62 | Long BSR |
| 63 | Padding |

The DRX-RetransmissionTimerUL is not the only parameter which that has been enhanced. A different number of retransmissions can be indicated and used for different priority data packets. This number of retransmissions may also depend on the required reliability for a given data stream inside one DRB 40. Therefore, data packets that are more important may use a higher number of repetitions (i.e., anther transmission quality parameter) compared with other, lower priority data packets or streams. These show example transmission quality parameters and how they may be communicated to different components within the system.

These are examples of a method for use within a wireless digital telecommunication system including a base station and a terminal or UE 10, wherein the base station 20 provides the UE 10 with a set of parameters to be used within the same data radio bearer depending on the priority of the packets and wherein the priority of the packets is indicated to the gNB 20.

Physical Uplink Shared Channel (PUSCH) Resources are transmitted with particular periodicities in telecommunications systems (e.g., 5G). The following enhancement describes how these periodicities can be varied within different components and how this information can be received when the periodicities are varied. This involves the use of a table or bitmap of the periodicity, which is communicated between components or nodes in the system.

The bitmap of periodicities is provided to the UE 10 for combined use of Uplink resources. This enables a further enhancement by enabling the scheduling of the UE 10 to be carried out in a more optimised way. This improves efficiencies as different data packets can be treated differently rather than transmitting them according to the highest requirements through a DRB 40. This can be especially useful if the data packets have different round trip timing (RTT) requirements, for example.

A table or bitmap with this periodicity mapping is provided to the UE or UEs 10. In the example illustrated in tables 3 to 5, there are two different data services with different periodicity requirements. As described previously, the two separate data services can set up two separate DRBs (DRB1 and DRB2 set up according to the separate requirements of table 3) having different transmission quality parameters (in this example, 100ms and 150ms periodicities), in a similar way to that shown in figure 4.

**Table 3**

| | | | | | | | |
|---|---|---|---|---|---|---|---|
| DRB1 | 100 ms | 100 ms | 100 ms | 100 ms | 100 ms | | |
| DRB2 | 150 ms | 150 ms | 150 ms | 150 ms | 150 ms | | |

Alternatively, the data packets from the two different data services may be multiplexed (e.g., using time division multiplexing) within the same DRB 40, as in a similar way to that shown in figure 5, i.e., multiplexed into a single DRB 40. In existing telecommunications networks, this requires a DRB 40 to be set up according to the requirements shown in table 4, i.e., with the lowest latency multiplexing being used for all data packets (100ms in this example).

**Table 4**

| | | | | | | | |
|---|---|---|---|---|---|---|---|
| DRB1 Stream 1 | 100 ms | 100 ms | 100 ms | 100 ms | 100 ms | | |
| DRB1 Stream 2 | 150 ms | 150 ms | 150 ms | 150 ms | 150 ms | | |
| Multiplex DRB | 100ms | 100ms | 100ms | 100ms | 100ms | | |

However, when a mapping of the periodicities of the different data packet types can be sent to the UE 10 then variable periodicities can be used, specific to each data packet or data packet type.

**Table 5**

| | | | | | |
|---|---|---|---|---|---|
| Stream 1 | 100 ms/X | 100 ms/X | 100 ms/X | 100 ms/X | 100 ms/X |
| Stream 2 | 150 ms/Y | 150 ms/Y | 100 ms/Y | 150 ms/Y | 150 ms/Y |
| Table of new transmission provided to the UE | 100ms/x+y | 100ms/x | 100ms/x+y | 100ms/x | 100ms/x+y |

X and Y are data packets belonging to stream 1 and stream 2, respectively. The gNB 20 provides a "configured grant" configuration with a periodicity that the data may be sent in Uplink (UL) and also a configuration describing the periodicities of each data stream. The UE 10 may then transmit data belonging to Stream 1 or Stream 2 or alternatively, as a bit of one stream and a bit of the other stream. More than two streams may be used in a similar way. Whatever transmission scheme is used, the information used define such a scheme is encoded within a bitmap or schema (e.g., a table such as table 5). Such a table or bitmap may be devised based on properties of the data, available buffers and/or particular QoS requirements. In another example implementation, the separate data streams may relate to the I and P frames of a video stream. I-frames need to be transmitted less frequently that P-frames but require more system resources as they are less compressed. In this example, there is one data service being provided (e.g., live stream video) but two (or more types) of data packets are used and transmitted at different periodicities through the same DRB 40.

Information is provided to the UE 10 so that it can determine which data belongs to which stream. The way in which this information is provided may depend on the data within the stream. However, this information may be provided by using upper layer protocols such as GTP-U, TCP, UDP or others.

The above-described implementations describe enhancements to the UL and downlink (DL), including providing the UE 10 with a visibility of data traffic patterns. Similar and additional improvements are available for the Downlink (DL), requiring the base station (e.g., gNB) 20 to have visibility of the incoming packets. Some of the examples of traffic pattern characteristics include but are not limited to: the periodicity of the data, the amount of data in a particular time interval, packet value, and acceptable jitter.

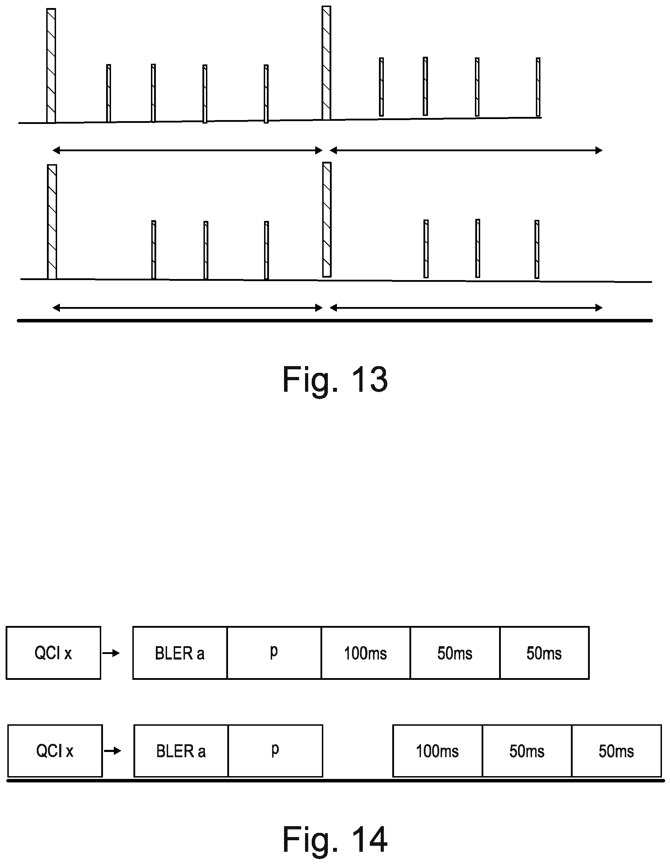

This may be achieved using new QoS/5QI values and GTP-U packet marking, for example. The Access and Mobility Management Function (AMF) may include new characteristics for use when a new QoS Flow is established. These new characteristics may include but are not limited to: the periodicity of the data stream, the size of the data packet, relative importance of the data traffic, etc. This is illustrated schematically as the packet flow shown in figure 13. This figure illustrates data packets being sent having different sizes and with different priorities, through the DRB 40. New attributes may be included as new QoS values or as separate priorities. This is illustrated schematically in figure 14.

Figure 14 illustrates an example of inclusion of new traffic characteristics and indication of new characteristics using newly a defined QoS Class Index (QCI). QCI indicates QoS attributes of the traffic including the legacy QoS attributes (BLER and priority) and the newly added QoS attributes of traffic arrival pattern. The traffic arrival pattern in this example is that the first packet arrives at T1 and the second packet arrives at T1+100ms, the third packet arrives at T1+100+50ms and the fourth packet arrives at T1+100+50+50ms. The packet arrival pattern repeats. As such the fifth packet arrives at T1+100+50+50+100ms and so on. The corresponding QCI value is communicated to the network nodes at the bearer setup, e.g., using information included within the data packets. This information may be included as GTP-U packet marking, for example. Different combinations of packet arrival patterns and different repeating lengths and timings may be used. Moreover, bearers can be setup using the legacy bearer setup procedure, e.g., using control plane signalling for bearer setup.

Figure 14 also illustrates the newly added QoS attributes of traffic arrival as a separately added QoS attribute. QCI values refers to the legacy QoS attributes such as BLER and priority, while the traffic arrival pattern is provided together with the QCI value. In this example traffic arrival pattern is provided as an array [100ms, 50ms, 50ms]. This has the same interpretation as above such that the first packet arrives at T1 and the second packet arrives at T1+100ms, the third packet arrives at T1+100+50ms and the fourth packet arrives at T1+100+50+50ms. The packet arrival pattern repeats. As such the fifth packet arrives at T1+100+50+50+100ms and so on. the corresponding QCI value and the traffic arrival pattern is communicated to the corresponding network nodes at the bearer setup.

The base station (e.g., gNB) 20 receives such parameters and sets up DRB(s) 40 accordingly. User Plane data packets may be recognised at the gNB level in DL based on any information inside the headers of transport protocols (e.g., GTP-U, UDP, TCP, RTP, etc.).

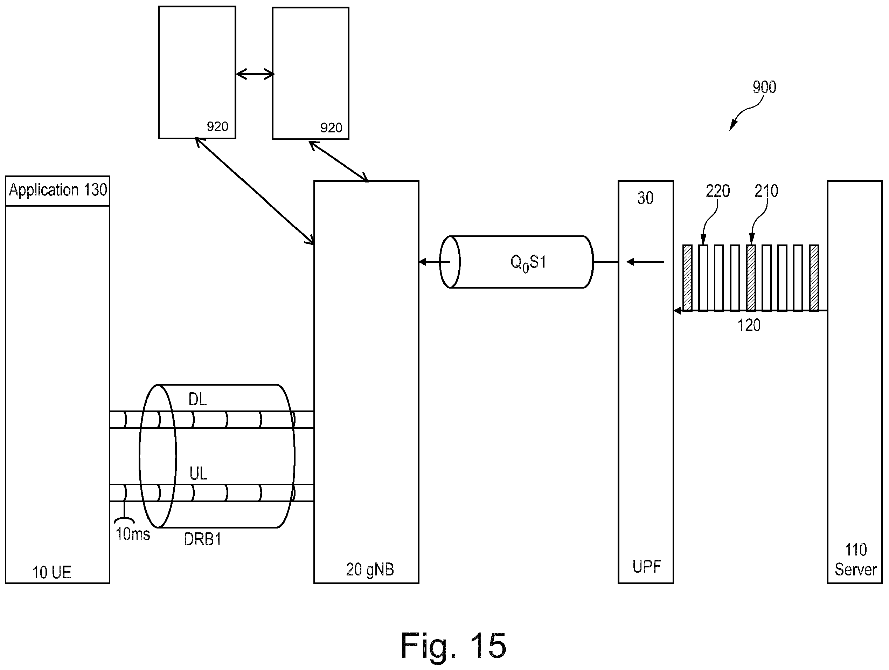

Figure 15 shows schematically a system 900 for managing one or more (preferably at least two) base stations or gNBs. This system 900 is similar to the system 200 described with reference to figure 3 and similar features have the same reference numerals. As in system 200, a server 110 provides a data stream 120 through the UPF 30 to a base station 20. The base station 20 provides one or more DRBs to provide UE 10 with data services (any number of DRBs may be provided). However, base station 20 also analyses properties or characteristics of the data stream that it provides to UE 10. Information about these properties or characteristics are sent as data (e.g., over a radio or microwave link or using wired communication) to one or more other similar base stations 920. These other base stations 920 may also gather information about the data streams that they provide to other UEs or groups of classes of UEs. Two further base stations 920 are shown in figure 15 but this may be any number of base stations (e.g., 1, 2, 3-100 or more). Whilst the example shown in figure 15 indicates a periodicity of 10ms (UL), any periodicity value may be used (e.g., 50ms, 100ms, etc.) for either UL or DL in the DRB.

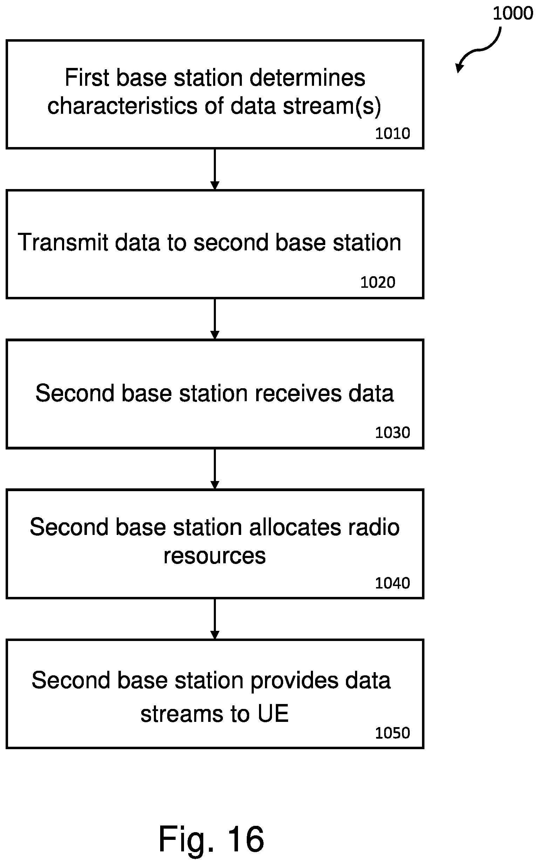

Figure 16 shows a flowchart of a method 1000 used to operate the system 900 of figure 15. At step 1010, a first base station (e.g., gNB 20) determines characteristics of one or more data streams between the base station 20 and one or more UEs 10. These characteristics may include but are not limited to QoS latency, bandwidth, periodicity, error rate, priority, cyclic data patterns, round trip delay, jitter, data volume and/or data rate variation (e.g., over time). These characteristics may be gathered for a specific UE 10 or groups of UEs in the same category (e.g., device type, data service provided, etc.) or a data service or types of data service, for example. Information describing the characteristics of the data stream or data streams is transmitted to the other base station or base stations 920 (step 1020). These may be neighbouring base stations (e.g., neighbouring cell sites) or across many or all base stations in the telecommunications network. The characteristics for particular data stream types may change over time. Therefore, this information may include update or change information for particular categories of data streams. Base stations may store and update these characteristics and associated information locally or remotely for later use.

The other base stations 920 receive this information (e.g., directly from base station 20 or indirectly through intermediate servers or the core network) at step 1030. The other base stations 920 use this received information to allocate their own radio resources (step 1040). Again, they may store the received information and update this over time. Other information may also be used to determine this allocation. For example, the current capacity or resources available to the base station 920 may also be taken into account when allocating the radio resources.

At this point, the method 900 ensures that the correct, appropriate, or more optimised radio resources are allocated. This in itself provides advantages, as the base station 20 can more efficiently allocate available the radio resources for later or current use and can use these allocation details accordingly. Preferably, the allocated radio resources may then be used to provide a new data stream (or to reallocate radio resources to an existing data stream) to a UE 10 at step 1050. This may be the same UE 10 that has moved to the cell site of base station 920 or may be a different UE 20 in the same or a similar category to the UE 10 where the characteristics were determined against UE 10.

As described above, XR (and other) applications and application servers can provide some or all information about the characteristics of traffic to the mobile network (core network) of the operator and the operator can configure its network or radio resources accordingly. Therefore, different data streams and traffic may be optimised within the network according to the requirements of these characteristics.

Cooperation between the application providers (applications servers) and mobile operators may or may not be fully established. Therefore, such information may be provided to the network operator, may only be provided in an incomplete form, partially or may not be provided at all.

If this information is not provided or not sufficiently provided, then the operator may instead establish a legacy bearer with a legacy set of requirements. This typically treats all the packets within the XR (or other) application with the same requirements (e.g., in accordance with standard TS 23.501).

However, this may not provide enough granularity or be accurate or current enough to enable the telecommunications network to differentiate between the requirements of different data streams such as video, audio, and pose information belonging to the same application, for example, and so it will not be able to treat different data streams having different technical requirements in a different way. Therefore, the network will only be able satisfy the requirements of an established QoS flow and will typically have to allocate a higher or highest level of resources to comfortably meet any possible set of requirements. This may allocate greater radio and other resources than is necessary, leading to inefficiencies.

Different streams, especially within XR (or other data service) implementations, may have different requirements and characteristics.

For example, the characteristics of these different data streams (e.g., provided by different application servers and services) may include any one or more of:
Traffic periodicity;
Throughput;
Size of data packets;
Round trip delay currently and from the past on a similar traffic;
Observed jitter;
Dropping rate and characteristics of any dropped packets;
PDU statistics in terms of PDU numbers, periodicity, etc.;
Static or semi-statistic parameters which may be known on granularity of the traffic flow or QoS Flow to the base station (gNB 20);
Jitter requirements;
PDB for a particular flow;
Packet Error Rate;
Priority;
GBR/Non-GBR;
PDU Set parameters; and
Others

The base station within the system 900 may treat different data flows within the data traffic differently.

For example, the following steps may be carried out:
1. A gNB observes packets coming to the gNB from the core network or the UE 10 and cluster or characterise these according to one or more of the parameters above or sets of parameters;
2. Map different flows of the observed traffic to a specific user, UE, user group or category of users or UEs;
3. Produce statistics corresponding to a particular user group (or category of UEs) and data flows within the data traffic;
4. Adapt the parameters to optimise one or more parameters above, based on user experience. Information describing user experience may be provided during XR operation (or during any other data service) by the device or UE in the form of a table with parameters such as: Frame Rate modification (Increase, reduce)/resolution redaction, for example;
5. Transmit collected information to other gNB(s) including all or part of the information collected. The information sent to other nodes or base stations may also be different depending on the type of the different base stations. For example, if other nodes are from the same vendor or a different vendor, and/or if the other base station(s) have the same or different capabilities to process the provided information; and
6. Other base stations 920 (gNBs) can adapt their configurations and radio resource allocation once devices or services of a similar category or APN connection commence transmissions.

Data flows may be packet data units having common characteristics in download (DL) or upload (UL) in terms of the characteristics described above. The characteristics may take the form of ranges. For example, all packets with a periodicity of less than 4 ms and with the size of the data packet under 100 bytes in UL. Other ranges, characteristics and groups of characteristics may be used.

User groups may be identified. For example, a user group identification may be based on SPID and/or Slices ID allocated to the user or UE and/or be based on the IMEISV of the devices in use. This may also consider the required QoS or PDN that is in use, for example. User group identifications may be transmitted with the data stream characteristics to new base stations. The data stream characteristics may also take the form of required radio resources or parameters used to configure the base station or components within the base station. The information describing the characteristics may take the form of identifiers or codes that can be looked up by the receiving base station, for example.

In order to allocated radio resources, particular parameters may be adapted. Adaptations of the parameters may not be limited and may change over time. These parameters may be in the areas of C-DRX (e.g., PDCCH monitoring aspects), configured or dynamic grant operation, SPS, Packet dropping or other areas. Machine learning and artificial intelligence processes may be used to determine characteristics of the data streams in the first base station 20 and may also be used to allocate or set the radio or system resources in the additional base stations 920 that receive the characteristics, preferably before new UEs 10 connect.

As will be appreciated by the skilled person, details of the above embodiment may be varied without departing from the scope of the present invention, as defined by the appended claims.

For example, the example systems are shown as having a single UE but many UEs may be included and serviced by the described systems and methods. Furthermore, a plurality of base stations (e.g., gNBs) may be added to the system and include the described enhanced functionality. Various components within the systems may implement the described methods, including the UEs, the base stations, the servers and/or dedicated servers (e.g., virtual, dynamic, or static servers). Other multiplexing types may be used and this is not limited to time division multiplexing. Whilst handover requests are described with reference to figures 15 and 16, this is only one example implementation of the method.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method for managing one or more base stations, the method comprising the steps of:
a first base station determining characteristics of one or more data streams between the first base station and one or more user equipment, UE;
transmitting data describing the determined characteristics of the one or more data streams to a second base station;
the second base station receiving data describing the determined characteristics of the one or more data streams; and
the second base station allocating radio resources of the second base station based on the received characteristics.

2. The method of claim 1 further comprising the step of:
the second base station providing a data stream to a UE using the allocated radio resources.

3. The method of claim 1 or claim 2, wherein the step of allocating resources further comprises the step of setting up, configuring and/or reconfiguring one or more data radio bearer, DRB, between the UE and the second base station.

4. The method according to any previous claim further comprising the step of the first base station determining a category for each of the one or more data streams, and wherein the data describing the determined characteristics includes the category of each of the one or more data streams.

5. The method of claim 4, further comprising the step of determining that the data stream provided to the UE is in the same category as included in the received data before the step of allocating the radio resources of the second base station.

6. The method according to any of claim 3 to 5, wherein the category comprises any one or more of: UE identifier or group of UE identifiers and data service type of the data stream.

7. The method of claim 5 or claim 6 further comprising the step of the second base station determining that sufficient radio resources are available to provide the data stream to the UE according to the received characteristics before admitting the UE access to the second base station.

8. The method according to any previous claim wherein the first base station and the second base station are within adjacent cell sites.

9. The method according to any previous claim wherein the characteristics of the one or more data streams comprising any one or more of: quality of service, QoS; latency; bandwidth; periodicity; error rate; priority; cyclic data patterns; round trip delay; jitter; data volume; and data rate variation.

10. The method according to any previous claim, wherein the one or more data streams between the base station and one or more UE are uplink and/or downlink data streams.

11. The method according to any previous claim, wherein the step of the first base station determining characteristics of one or more data streams between the first base station and one or more UE further comprises an application server providing the characteristics of the data stream, wherein the application server generates the one or more data streams.

12. The method of claim 11, wherein the application server provides the characteristics to a core network and the core network provides the characteristics to the first base station.

13. The method according to any previous claim, wherein the one or more data streams are any one or more of: augmented reality; virtual reality; extended reality data streams; and cloud gaming.

14. A telecommunications system comprising:
a first base station; and
a second base station, wherein
the first base station comprises means adapted to execute the steps of:
determining characteristics of one or more data streams between the first base station and one or more user equipment, UE; and
transmitting data describing the determined characteristics of the one or more data streams to the second base station, and further wherein
the second base station comprises means adapted to execute the steps of:
receiving the data describing the determined characteristics of the one or more data streams; and
allocating radio resources of the second base station based on the received characteristics

15. The telecommunications system of claim 14, wherein the means of the second base station are further adapted to execute the step of:
providing a data stream to a UE using the allocated radio resources.

16. The telecommunications system of claim 14 or claim 15 further comprising an application server configured to provide the one or more data streams.

17. A computer program product comprising instructions which, when the program is executed by a computer, causes the computer to carry out the method of any of claims 1 to 13.
